# EUROPEAN PATENT APPLICATION

(11) **EP 4 827 056 A1**
(43) Date of publication of application: **21.10.2026**
(21) Application number: 24906074.0
(22) Date of filing: 03.12.2024
(51) Int. Cl.: H04L 27/26

(54) **COMMUNICATION METHOD AND COMMUNICATION APPARATUS**

(30) Priority: 19.12.2023 CN 202311762610
(71) Applicant: Huawei Technologies Co., Ltd., Shenzhen, Guangdong 518129 (CN)
(72) Inventor: XUE, Yifan, Shenzhen, Guangdong 518129 (CN); LI, Qiang, Shenzhen, Guangdong 518129 (CN); XUE, Lixia, Shenzhen, Guangdong 518129 (CN)
(74) Representative: Gill Jennings & Every LLP
(86) International application number: PCT/CN2024/136321
(87) International publication number: WO 2025/130589

(57) **Abstract**

This application provides a communication method and a communication apparatus. The method includes: receiving a reference signal, where the reference signal includes a first sub-signal and a second sub-signal, the first sub-signal is before the second sub-signal, the reference signal includes X OOK symbols, the X OOK symbols include X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X. In this application, the reference signal includes two parts: the first sub-signal and the second sub-signal. In this way, a receive side may estimate a signal amplitude average of the reference signal or the second sub-signal based on a part of the reference signal, that is, the first sub-signal, so that the receive side can perform a direct current removal operation based on an estimation result, and synchronization performance of the reference signal is improved through the direct current removal operation.

## Description

This application claims priority to Chinese Patent Application No. 202311762610.0, filed with the China National Intellectual Property Administration on December 19, 2023 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

A terminal device may receive a wake-up signal through a separate low-power small circuit, for example, wake-up radio (wake-up radio, WUR), and a main receiver may be in a sleep state. After the terminal device detects the wake-up signal through the WUR, the terminal device triggers wake-up of the main receiver. After the main receiver is woken up, the terminal device may receive data or the like through the main receiver. After the WUR is introduced, how to improve performance of a reference signal is a problem worth consideration.

### SUMMARY

This application provides a communication method and a communication apparatus, to improve performance of a reference signal, for example, synchronization performance of the reference signal.

According to a first aspect, a communication method is provided. The method may be performed by a communication apparatus. The communication apparatus may be a device (for example, referred to as a receive side device like a terminal device, or a network device), or may be a component (for example, a chip, a chip system, or a circuit) of the device. This is not limited in this application.

The method may include: receiving a reference signal, where the reference signal includes a first sub-signal and a second sub-signal, the first sub-signal is before the second sub-signal, the reference signal includes X on-off-keying OOK symbols, the X OOK symbols include X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

Optionally, the method further includes: determining the reference signal, for example, determining sending time of the reference signal.

Based on the foregoing technical solution, the reference signal includes two parts, where one part is referred to as the first sub-signal, the other part is referred to as the second sub-signal, and the first sub-signal is before the second sub-signal. In this way, a receive side may implement a specific requirement by using this design of the reference signal. For example, the receive side may estimate a signal amplitude (for example, a signal amplitude average) of the reference signal or the second sub-signal based on a part of the reference signal, that is, the first sub-signal, so that the receive side can perform a direct current removal operation based on an estimation result, and performance (for example, synchronization performance) of the reference signal can be improved through the direct current removal operation. On the contrary, if the entire reference signal is used for estimating the signal amplitude, the receive side needs to first buffer the reference signal before performing signal amplitude estimation, causing a requirement for specific storage space. In addition, the receive side needs to perform the direct current removal operation after receiving the entire reference signal, and then perform further processing (for example, time synchronization) on the reference signal, causing a specific delay. Therefore, in comparison with estimating the signal amplitude by using the entire reference signal, the foregoing technical solution further avoids the requirement for the storage space, and reduces a delay.

With reference to the first aspect, in some implementations of the first aspect, the second sub-signal is determined based on a first sequence, or the reference signal is determined based on the first sequence.

Optionally, the first sequence is a binary sequence.

Optionally, the first sequence is a sequence having an autocorrelation characteristic, for example, a sequence having a good autocorrelation characteristic.

Based on the foregoing technical solution, a part of the reference signal (that is, the second sub-signal) is determined based on a sequence (in other words, the part of the signal is generated based on the sequence), or the reference signal (that is, including the first sub-signal and the second sub-signal) is determined based on a sequence (in other words, the reference signal is generated based on the sequence). In this way, a proper solution may be selected based on an actual communication requirement or condition to generate the reference signal.

With reference to the first aspect, in some implementations of the first aspect, a correlation value between the first sequence and the first sequence is greater than or equal to a third threshold, and a correlation value between the first sequence and a cyclic shift of the first sequence is less than or equal to a fourth threshold.

Based on the foregoing technical solution, a sequence used for generating the reference signal or the part of the reference signal has a high correlation with the sequence, and has a low correlation with a cyclic shift of the sequence. Therefore, an autocorrelation characteristic of the sequence is good, so that performance of the reference signal generated by using the sequence having the good autocorrelation characteristic is also good, and the performance of the reference signal can also be improved.

With reference to the first aspect, in some implementations of the first aspect, the first sequence is any one of the following: an m-sequence, a gold sequence, or a pseudo-random sequence.

With reference to the first aspect, in some implementations of the first aspect, the first sub-signal includes Y OOK symbols, the Y OOK symbols include Y1 first symbols and Y2 second symbols, Y is an integer greater than 1 and less than X, Y1 and Y2 are integers greater than or equal to 0, and Y1+Y2=Y.

With reference to the first aspect, in some implementations of the first aspect, Y1 and Y2 satisfy any one of the following: Y1=Y, and Y2=0; Y1=Y2; $Y 1 = \left⌈Y/2\right⌉$, and $Y 2 = \left⌊Y/2\right⌋$; or $Y 1 = \left⌊Y/2\right⌋$ , and $Y 2 = \left⌈Y/2\right⌉$.

Optionally, the first sub-signal is determined based on a specific sequence. For the sequence, refer to the foregoing first sequence.

With reference to the first aspect, in some implementations of the first aspect, the first sub-signal is used for determining the signal amplitude of the reference signal or the second sub-signal.

Optionally, the first sub-signal is used for determining the signal amplitude average of the reference signal or the second sub-signal.

Based on the foregoing technical solution, the receive side may estimate the signal amplitude (for example, the signal amplitude average) of the reference signal or the second sub-signal based on the part of the reference signal, that is, the first sub-signal, so that the receive side can perform the direct current removal operation based on the estimation result, and the performance (for example, the synchronization performance) of the reference signal can be improved through the direct current removal operation.

With reference to the first aspect, in some implementations of the first aspect, the method further includes: performing time synchronization based on the second sub-signal; or performing time synchronization based on the second sub-signal and the first sub-signal.

With reference to the first aspect, in some implementations of the first aspect, the performing time synchronization based on the second sub-signal includes: performing time synchronization based on a signal obtained by subtracting P or P/2 from the signal amplitude of the second sub-signal, where P represents the signal amplitude average determined based on the first sub-signal.

With reference to the first aspect, in some implementations of the first aspect, the performing time synchronization based on the second sub-signal and the first sub-signal includes: performing time synchronization based on a signal obtained by subtracting P or P/2 from signal amplitudes of the first sub-signal and the second sub-signal, where P represents the signal amplitude average determined based on the first sub-signal.

With reference to the first aspect, in some implementations of the first aspect, the method further includes: receiving a wake-up signal, where the wake-up signal is used for waking up at least one terminal device, the wake-up signal includes Z OOK symbols, the Z OOK symbols include at least one first symbol and/or at least one second symbol, the Z OOK symbols include Z' OOK symbols, the X OOK symbols include X' OOK symbols, a length of each of the Z' OOK symbols is different from a length of each of the X' OOK symbols, Z, Z', and X' are all integers greater than 0, Z' is less than or equal to Z, and X' is less than or equal to X.

That the length of each of the Z' OOK symbols is different from the length of each of the X' OOK symbols may alternatively be replaced with that a quantity of OOK symbols corresponding to the wake-up signal in one time unit is different from a quantity of OOK symbols corresponding to the reference signal in one time unit. For example, the quantity of OOK symbols corresponding to the wake-up signal in one time unit is greater than the quantity of OOK symbols corresponding to the reference signal in one time unit. For example, one time unit may be one orthogonal frequency division multiplexing (orthogonal frequency division multiplexing, OFDM) symbol.

Based on the foregoing technical solution, a length of at least one OOK symbol in the wake-up signal is different from a length of at least one OOK symbol in the reference signal. In this way, an appropriate OOK symbol length may be selected based on a characteristic of the signal and a requirement on the signal.

With reference to the first aspect, in some implementations of the first aspect, the length of each of the Z' OOK symbols is longer than the length of each of the X' OOK symbols.

Based on the foregoing technical solution, a length of an OOK symbol in the wake-up signal is longer than a length of an OOK symbol in the reference signal. In this way, not only demodulation performance of the wake-up signal can be improved, but also the synchronization performance of the reference signal can be improved. Specifically, detailed analysis is performed in the following embodiments.

With reference to the first aspect, in some implementations of the first aspect, Z' is equal to Z, and X' is equal to X.

Based on the foregoing technical solution, a length of each OOK symbol in the wake-up signal is different from a length of each OOK symbol in the reference signal.

With reference to the first aspect, in some implementations of the first aspect, the method further includes: receiving first indication information and/or second indication information, where the first indication information indicates a length of at least one of the Z OOK symbols, and the second indication information indicates a length of at least one of the X OOK symbols.

According to a second aspect, a communication method is provided. The method may be performed by a communication apparatus. The communication apparatus may be a device (for example, referred to as a transmit side device like a terminal device, or a network device), or may be a component (for example, a chip, a chip system, or a circuit) of the device. This is not limited in this application.

The method may include: sending a reference signal, where the reference signal includes a first sub-signal and a second sub-signal, the first sub-signal is before the second sub-signal, the reference signal includes X on-off-keying OOK symbols, the X OOK symbols include X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

Optionally, the method further includes: determining the reference signal, for example, determining sending time of the reference signal.

With reference to the second aspect, in some implementations of the second aspect, the second sub-signal is determined based on a first sequence, or the reference signal is determined based on the first sequence.

With reference to the second aspect, in some implementations of the second aspect, a correlation value between the first sequence and the first sequence is greater than or equal to a third threshold, and a correlation value between the first sequence and a cyclic shift of the first sequence is less than or equal to a fourth threshold.

With reference to the second aspect, in some implementations of the second aspect, the first sequence is any one of the following: an m-sequence, a gold sequence, or a pseudo-random sequence.

With reference to the second aspect, in some implementations of the second aspect, the first sub-signal includes Y OOK symbols, the Y OOK symbols include Y1 first symbols and Y2 second symbols, Y is an integer greater than 1 and less than X, Y1 and Y2 are integers greater than or equal to 0, and Y1+Y2=Y.

With reference to the second aspect, in some implementations of the second aspect, Y1 and Y2 satisfy any one of the following: Y1=Y, and Y2=0; Y1=Y2; $Y 1 = \left⌈Y/2\right⌉$, and $Y 2 = \left⌊Y/2\right⌋$; or $Y 1 = \left⌊Y/2\right⌋$, and $Y 2 = \left⌈Y/2\right⌉$.

With reference to the second aspect, in some implementations of the second aspect, the first sub-signal is used for determining a signal amplitude of the reference signal or the second sub-signal.

With reference to the second aspect, in some implementations of the second aspect, the method further includes: sending a wake-up signal, where the wake-up signal is used for waking up at least one terminal device, the wake-up signal includes Z OOK symbols, the Z OOK symbols include at least one first symbol and/or at least one second symbol, the Z OOK symbols include Z' OOK symbols, the X OOK symbols include X' OOK symbols, a length of each of the Z' OOK symbols is different from a length of each of the X' OOK symbols, Z, Z', and X' are all integers greater than 0, Z' is less than or equal to Z, and X' is less than or equal to X.

With reference to the second aspect, in some implementations of the second aspect, the length of each of the Z' OOK symbols is longer than the length of each of the X' OOK symbols.

With reference to the second aspect, in some implementations of the second aspect, Z' is equal to Z, and X' is equal to X.

With reference to the second aspect, in some implementations of the second aspect, the method further includes:
sending first indication information and/or second indication information, where the first indication information indicates a length of at least one of the Z OOK symbols, and the second indication information indicates a length of at least one of the X OOK symbols.

According to a third aspect, a communication method is provided. The method may be performed by a communication apparatus. The communication apparatus may be a device (for example, referred to as a receive side device like a terminal device, or a network device), or may be a component (for example, a chip, a chip system, or a circuit) of the device. This is not limited in this application.

The method may include: receiving a reference signal, where the reference signal includes X on-off-keying OOK symbols, the X OOK symbols include at least one first symbol and/or at least one second symbol, a signal amplitude of the first symbol is greater than or equal to a first threshold, and a signal amplitude of the second symbol is less than or equal to a second threshold; and receiving a wake-up signal, where the wake-up signal is used for waking up at least one terminal device, the wake-up signal includes Z OOK symbols, the Z OOK symbols include at least one first symbol and/or one second symbol, the Z OOK symbols include Z' OOK symbols, the X OOK symbols include X' OOK symbols, a length of each of the Z' OOK symbols is different from a length of each of the X' OOK symbols, Z, Z', X, and X' are all integers greater than 0, Z' is less than or equal to Z, and X' is less than or equal to X.

With reference to the third aspect, in some implementations of the third aspect, the length of each of the Z' OOK symbols is longer than the length of each of the X' OOK symbols.

With reference to the third aspect, in some implementations of the third aspect, Z' is equal to Z, and X' is equal to X.

With reference to the third aspect, in some implementations of the third aspect, the method further includes: receiving first indication information and/or second indication information, where the first indication information indicates a length of at least one of the Z OOK symbols, and the second indication information indicates a length of at least one of the X OOK symbols.

According to a fourth aspect, a communication method is provided. The method may be performed by a communication apparatus. The communication apparatus may be a device (for example, referred to as a transmit side device like a terminal device, or a network device), or may be a component (for example, a chip, a chip system, or a circuit) of the device. This is not limited in this application.

The method may include: sending a reference signal, where the reference signal includes X on-off-keying OOK symbols, the X OOK symbols include at least one first symbol and/or at least one second symbol, a signal amplitude of the first symbol is greater than or equal to a first threshold, and a signal amplitude of the second symbol is less than or equal to a second threshold; and sending a wake-up signal, where the wake-up signal is used for waking up at least one terminal device, the wake-up signal includes Z OOK symbols, the Z OOK symbols include at least one first symbol and/or one second symbol, the Z OOK symbols include Z' OOK symbols, the X OOK symbols include X' OOK symbols, a length of each of the Z' OOK symbols is different from a length of each of the X' OOK symbols, Z, Z', X, and X' are all integers greater than 0, Z' is less than or equal to Z, and X' is less than or equal to X.

With reference to the fourth aspect, in some implementations of the fourth aspect, the length of each of the Z' OOK symbols is longer than the length of each of the X' OOK symbols.

With reference to the fourth aspect, in some implementations of the fourth aspect, Z' is equal to Z, and X' is equal to X.

With reference to the fourth aspect, in some implementations of the fourth aspect, the method further includes: sending first indication information and/or second indication information, where the first indication information indicates a length of at least one of the Z OOK symbols, and the second indication information indicates a length of at least one of the X OOK symbols.

With reference to the first aspect to the fourth aspect, in some implementations, the reference signal is a low-power synchronization signal LP-SS.

For beneficial effects of the second aspect to the fourth aspect and the possible designs, refer to the related descriptions of the first aspect. Details are not described herein again.

According to a fifth aspect, a communication apparatus is provided. The apparatus is configured to perform the method provided in any one of the first aspect to the fourth aspect. Specifically, the apparatus may include units and/or modules, for example, a processing unit and/or a communication unit, configured to perform the method provided in any one of the implementations of any one of the first aspect to the fourth aspect.

In an implementation, the apparatus is a communication device (for example, a terminal device, and for another example, a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes at least one processor, configured to perform the method provided in any one of the implementations of any one of the first aspect to the fourth aspect.

Optionally, the apparatus further includes a memory, configured to store a program. Correspondingly, the at least one processor is configured to execute the computer program or instructions stored in the memory.

Optionally, the apparatus further includes a communication interface. The communication interface is coupled to the processor, and may be configured to input information to the processor, or output information in the processor.

In an implementation, the apparatus is a communication device (for example, a terminal device, and for another example, a network device).

In another implementation, the apparatus is a chip, a chip system, or a circuit used in the communication device.

According to a seventh aspect, this application provides a processor, configured to perform the methods provided in the foregoing aspects.

Operations such as sending and obtaining/receiving related to the processor may be understood as operations such as outputting and inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code includes the method provided in any one of the implementations of any one of the first aspect to the fourth aspect.

According to a ninth aspect, a computer program product including instructions is provided. When the computer program product runs on a computer, the computer is caused to perform the method provided in any one of the implementations of any one of the first aspect to the fourth aspect.

According to a tenth aspect, a chip is provided. The chip includes a processor and a communication interface. The processor reads, through the communication interface, instructions stored in a memory, to perform the method provided in any one of the implementations of any one of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of any one of the first aspect to the fourth aspect.

According to an eleventh aspect, a communication system is provided. The communication system includes a first communication apparatus and a second communication apparatus. The first communication apparatus is configured to perform the method provided in any one of the implementations of the first aspect, and the second communication apparatus is configured to perform the method provided in any one of the implementations of the second aspect; or the first communication apparatus is configured to perform the method provided in any one of the implementations of the third aspect, and the second communication apparatus is configured to perform the method provided in any one of the implementations of the fourth aspect.

### BRIEF DESCRIPTION OF DRAWINGS

FIG. 1 is a diagram of a wireless communication system applicable to an embodiment of this application;
FIG. 2 is a diagram of a main circuit and a wake-up circuit;
FIG. 3 is a diagram of a waveform of a signal for which OOK modulation is used;
FIG. 4 is a diagram of a waveform of a signal for which Manchester encoding is used;
FIG. 5 is another diagram of a waveform of a signal for which Manchester encoding is used;
FIG. 6 and FIG. 7 are diagrams of an OOK symbol in time domain and frequency domain;
FIG. 8 is a diagram of a waveform of a signal that has passed through a channel;
FIG. 9 is a diagram of performing autocorrelation on a binary sequence;
FIG. 10 is a diagram of performing a DC removal operation;
FIG. 11 is a diagram of a communication method 1100 according to an embodiment of this application;
FIG. 12 is a diagram of a first sub-signal;
FIG. 13 is another diagram of a first sub-signal;
FIG. 14 is another diagram of a first sub-signal;
FIG. 15 is another diagram of a first sub-signal;
FIG. 16 is a diagram of another communication method 1600 according to an embodiment of this application;
FIG. 17 is a diagram of a synchronization signal correlation result;
FIG. 18 is a block diagram of a communication apparatus 1800 according to an embodiment of this application;
FIG. 19 is a diagram of another communication apparatus 1900 according to an embodiment of this application; and
FIG. 20 is a diagram of a chip system 2000 according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a non-terrestrial network (non-terrestrial network, NTN) system such as inter-satellite communication and satellite communication.

For example, a satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low-earth orbit satellite, a medium-earth orbit satellite, a high-earth orbit satellite, or the like. Alternatively, the satellite may be a non-terrestrial base station, a non-terrestrial device, or the like.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in a communication system may send a signal to another device or receive a signal from another device. The signal may include information, signaling, data, and the like. The device may alternatively be replaced with an entity, a network entity, a communication device, a communication module, a node, a communication node, or the like. In this disclosure, the device is used as an example for description.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, remote medical, a smart grid, smart furniture, a smart office, smart wearable, smart transportation, a smart city uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is the terminal or the UE is used below for description.

It should be understood that, in some scenarios, the UE may be further configured to serve as a base station. For example, the UE may act as a scheduling entity that provides a sidelink signal between UEs in a scenario like V2X, D2D, or P2P.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be mounted in the terminal device. In embodiments of this application, the chip system may include a chip, or may include a chip and another discrete component.

In embodiments of this application, a network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node.

In embodiments of this application, an apparatus configured to implement a function of the network device may be a network device; or may be an apparatus that can support the network device in implementing the function, for example, a chip system or a chip, where the apparatus may be mounted in the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

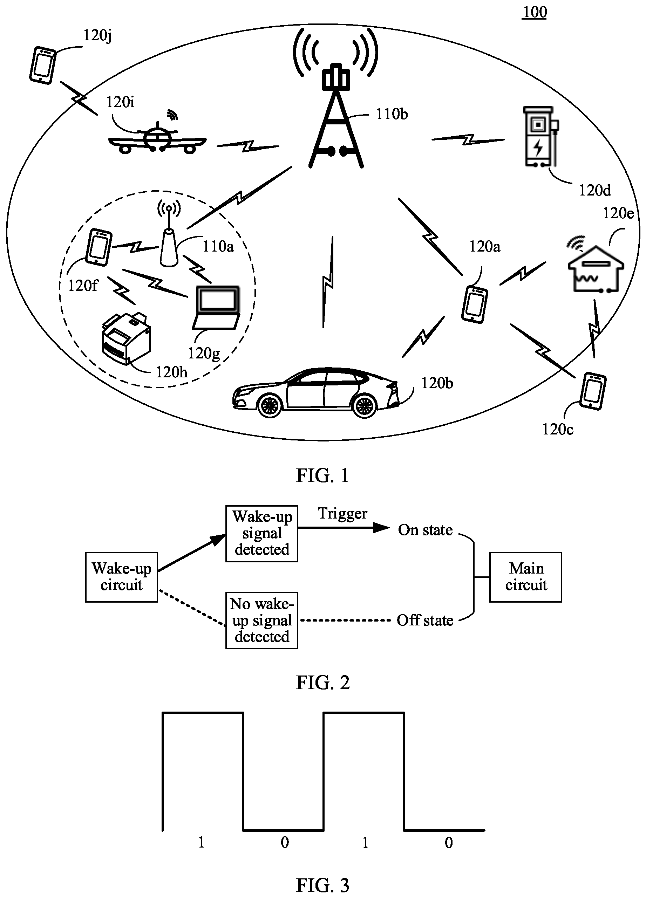

First, a communication system applicable to embodiments of this application is briefly described with reference to FIG. 1. The following is an example.

In an example, FIG. 1 is a diagram of a wireless communication system applicable to an embodiment of this application. As shown in FIG. 1, the wireless communication system includes a radio access network 100. The radio access network 100 may be a next generation (for example, 6G or a later version) radio access network, or a conventional (for example, 5G, 4G, 3G, or 2G) radio access network. One or more terminal devices (120a to 120j, collectively referred to as 12) may be interconnected or connected to one or more network devices (110a and 110b, collectively referred to as 110) in the radio access network 100. Network elements in the wireless communication system are connected through an interface (for example, NG or Xn) or an air interface.

When the network device communicates with the terminal device, the network device may manage one or more cells, and one cell may include at least one terminal device. The cell may be understood as an area in a coverage area of a radio signal of the network device.

FIG. 1 is only a diagram. The wireless communication system may further include another device, for example, may further include a core network device, a wireless relay device, and/or a wireless backhaul device, which are not shown in FIG. 1.

For ease of understanding of embodiments of this application, terms in this application are briefly described.
1. Wake-up circuit: is also referred to as a wake-up receiver/radio (wake-up receiver/radio, WUR), a low-power wake-up receiver (low-power wake-up receiver, LP-WUR), or a wake-up module, and may be understood as a separate low-power small circuit, for example, a circuit used by a terminal device in an idle state. The low-power small circuit may be implemented by using a separate small circuit with a simple structure or a chip, and has low power consumption. It may be understood that the wake-up circuit is merely named for differentiation, and a specific name of the wake-up circuit does not limit the protection scope of this application. For example, without loss of generality, the wake-up circuit may also be described as a first circuit (or a first module). The following uses the wake-up circuit for a uniform description.

A signal received by the terminal device through the wake-up circuit may be referred to as being transmitted on a wake-up link. The wake-up link represents a connection relationship between the terminal device and a network device, and is a logical concept rather than a physical entity. It may be understood that the wake-up link is merely named for differentiation, and a specific name of the wake-up link does not limit the protection scope of this application. For example, without loss of generality, the wake-up link may also be described as a first link. The following uses the wake-up link for a uniform description.

A signal received by the terminal device through the wake-up circuit may be referred to as a wake-up signal (wake-up signal, WUS) or a low-power wake-up signal (low-power wake-up signal, LP-WUS). It may be understood that the wake-up signal is merely named for differentiation, and a specific name of the wake-up signal does not limit the protection scope of this application. For example, without loss of generality, the wake-up signal may also be referred to as a signal. The following uses the wake-up signal for a uniform description.

2. Main circuit: is also referred to as a main receiver (main receiver, MR) or a main module, and may be understood as a circuit used when the terminal device normally performs data transmission, or a circuit used when the terminal device performs data transmission in a connected state. When the terminal device performs data transmission through the main circuit, power consumption is high. It may be understood that the main circuit is merely named for differentiation, and a specific name of the main circuit does not limit the protection scope of this application. For example, without loss of generality, the main circuit may also be described as a second circuit (or a second module). The following uses the main circuit for a uniform description.

A signal received by the terminal device through the main circuit may be referred to as being transmitted on a main link. The main link represents a connection relationship between the terminal device and the network device, and is a logical concept rather than a physical entity. It may be understood that the main link is merely named for differentiation, and a specific name of the main link does not limit the protection scope of this application. For example, without loss of generality, the main link may also be described as a second link. The following uses the main link for a uniform description.

In the following, for differentiation, a signal transmitted by the terminal device through the main circuit is denoted as a data signal.

Refer to FIG. 2. For example, FIG. 2 is a diagram of a main circuit and a wake-up circuit.

As shown in FIG. 2, a terminal device may receive (or detect) a wake-up signal through the wake-up circuit, and the terminal device may receive a data signal through the main circuit. It is assumed that the terminal device receives the wake-up signal through the wake-up circuit. If the terminal device detects no wake-up signal, the terminal device continues receiving the wake-up signal through the wake-up circuit, and the main circuit may be in an off state (or a sleep state). If the terminal device detects the wake-up signal, the terminal device triggers wake-up of the main circuit, that is, causes the main circuit to be in/be switched to an on state (or referred to as a working state or an active state). After the main circuit is turned on, the terminal device may perform transmission of the data signal through the main circuit.

3. On-off-keying (on-off-keying, OOK) modulation: is used for modulating information depending on whether a signal is sent, and a corresponding wake-up circuit may receive the signal by using an envelope detection method. In an OOK modulation technology, demodulation can be implemented by a receiver with extremely low complexity, so that an objective of low power consumption of the wake-up circuit can be achieved. To ensure a power consumption gain, the OOK modulation may be used for the wake-up signal. It may be understood that another modulation manner may also be used for the wake-up signal. This is not limited herein.

When the OOK modulation is used for the signal, each bit (that is, an encoded bit) may correspond to one symbol (symbol). Equivalently, a symbol may also be referred to as a chip (chip), or may be referred to as another name. This is not limited herein.

For example, when a bit (bit) is "1", a signal is transmitted in a symbol length (that is, a signal transmit power in the symbol length is not 0). When the bit is "0", no signal is transmitted in the symbol length (that is, the signal transmit power in the symbol length is 0). Alternatively, it may be understood as that, in OOK modulation, if energy is sent, it indicates that the bit is "1". If no energy is sent, it indicates that the bit is "0".

For another example, when a bit is "0", a signal is transmitted in a symbol length (that is, a signal transmit power in the symbol length is not 0). When the bit is "1", no signal is transmitted in the symbol length (that is, the signal transmit power in the symbol length is 0). Alternatively, it may be understood as that, in OOK modulation, if energy is sent, it indicates that the bit is "0". If no energy is sent, it indicates that the bit is "1".

For ease of description, the following mainly uses an example in which when the bit is "1", the signal is transmitted in the symbol length, and when the bit is "0", no signal is transmitted in the symbol length for description.

In addition, for ease of description, if a signal is transmitted in a symbol, the symbol is denoted as an ON symbol (symbol); and if no signal is transmitted in a symbol, the symbol is denoted as an OFF symbol. For example, when the bit is "1 ", the signal is transmitted in the symbol length, and when the bit is "0", no signal is transmitted in the symbol length. An ON symbol indicates that an information bit is "1", and an OFF symbol indicates that the information bit is "0". The ON symbol may also be referred to as an ON signal, and the OFF symbol may also be referred to as an OFF signal. For uniformity, the ON symbol and the OFF symbol are used for description below.

In addition, an OOK symbol mentioned below indicates a symbol obtained through OOK modulation. The OOK symbol may be, for example, an ON symbol, or may be an OFF symbol. For example, if the information bit is "1", the OOK symbol obtained through OOK modulation is an ON symbol. If the information bit is "0", the OOK symbol obtained through OOK modulation is an OFF symbol. The OOK symbol may also be referred to as an OOK signal. For uniformity, the OOK symbol is used for description below.

Refer to FIG. 3. For example, FIG. 3 is a diagram of a waveform of a signal for which OOK modulation is used.

For example, it is assumed that when a bit is "1", a signal is transmitted in a length of an OOK symbol. When the bit is "0", no signal is transmitted in the length of the OOK symbol. Therefore, the waveform shown in FIG. 3 may represent four bits "0100". To be specific, a 1^{st} bit is an OFF symbol, a 2^{nd} bit is an ON symbol, and a 3^{rd} bit and a 4^{th} bit are both OFF symbols. As shown in FIG. 3, a communication system generally uses a specific frequency (frequency) for sending, and a sent signal needs to be modulated on a carrier. At a receive side, the receive side detects an envelope (or energy) of the received signal, and determines whether the OOK symbol corresponds to the bit "0" or the bit "1", to complete demodulation.

4. Manchester (manchester) encoding: is biphase encoding, where the bit "0" or the bit "1" can be indicated through level conversion. For example, through Manchester encoding, the original bit "0" may be encoded as a bit "10", and the original bit "1" may be encoded as a bit "01". For differentiation, bits obtained by encoding the original bits, for example, the bits "10" and "01", may be referred to as encoded bits. When sending a signal, a transmit side may use two OOK symbols to send 1-bit original information. If the original bit "0" is encoded as the bit "10", and the original bit "1" is encoded as the bit "01", the original bit "0" corresponds to one ON symbol and then one OFF symbol, and the original bit "1" corresponds to one OFF symbol and then one ON symbol. When demodulating a signal for which Manchester encoding is used, a receive side may compare relative values of signal powers (or signal amplitudes) in two adjacent OOK symbols. If a signal power (or a signal amplitude) in a former OOK symbol is higher than a signal power (or a signal amplitude) in a latter OOK symbol, a received information bit is considered as "0". Otherwise, a received information bit is considered as "1". In this manner, an absolute threshold may not be selected for determining.

It may be understood that the foregoing uses an example in which the original bit "0" is encoded as the bit "10", and the original bit "1" is encoded as the bit "01" for description. This is not limited herein. For example, the original bit "0" is encoded as the bit "01", and the original bit "1" is encoded as the bit "10".

For example, a signal may be generated based on an orthogonal frequency division multiplexing (orthogonal frequency division multiplexing, OFDM) transmitter, or a signal may be modulated through an OFDM transmitter.

In a possible manner, one OOK symbol is transmitted in a length of one OFDM symbol, in other words, one OOK symbol occupies one OFDM symbol. For example, if an ON symbol needs to be sent in a length of one OOK symbol, the transmit side may send a specific signal, and make a contour of the signal in the length of the OOK symbol like a square wave as much as possible. If an OFF symbol needs to be sent in a length of one OOK symbol, the transmit side may disable time of the length of the OOK symbol.

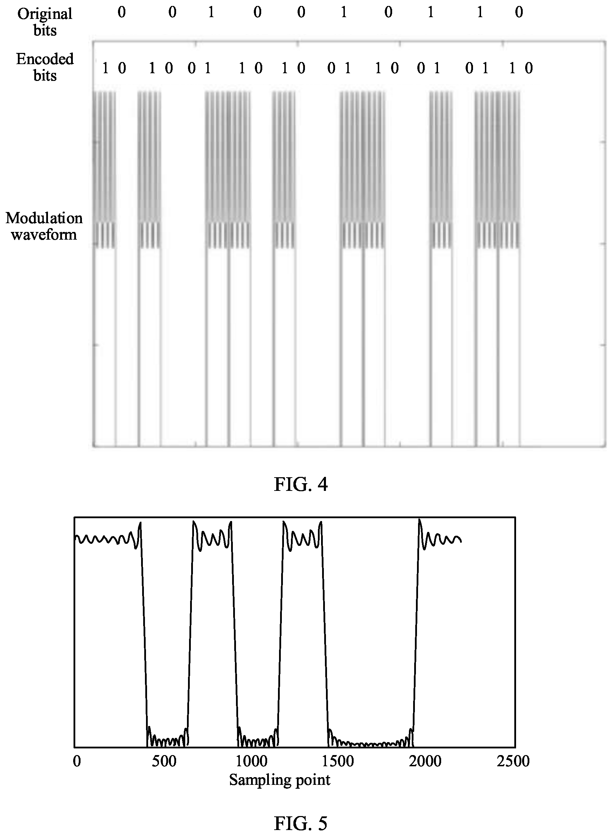

Refer to FIG. 4. For example, FIG. 4 is a diagram of a waveform of a signal for which Manchester encoding is used. As shown in FIG. 4, original bits are "0 0 1 0 0 1 0 1 1 0". It is assumed that the original bit "0" is encoded as "10", and the original bit "1 " is encoded as "01". In this case, encoded bits for which Manchester encoding is used are "10 10 01 10 10 01 10 01 01 10", and the waveform is shown in FIG. 4. A time length corresponding to each encoded bit may be considered as a length of one OFDM symbol. To be specific, one OOK symbol is transmitted in a length of one OFDM symbol, in other words, one OOK symbol occupies one OFDM symbol. When demodulating the signal, a receive side may compare relative values of signal powers (or signal amplitudes) in two adjacent OOK symbols, and determine, based on a comparison result, information bits obtained through demodulation.

In the foregoing manner, one OOK symbol is transmitted in a length of one OFDM symbol. The manner is simple, but a supported data rate is low. This is because in the foregoing manner, regardless of a signal bandwidth, one OOK symbol is transmitted in the length of one OFDM symbol. If a subcarrier spacing (subcarrier spacing, SCS) used by a system is 30 kHz, a length of one slot (slot) is 0.5 ms, and one slot includes 14 OFDM symbols, in this case, assuming that no encoding is used, and each OOK symbol carries 1-bit information, a supported maximum data rate is 1/0.5*14*1000=28 kbps.

To improve the data rate of the OOK symbol, in a possible manner, a length of the OOK symbol is shortened. To be specific, at least two OOK symbols are transmitted in a length of one OFDM symbol, in other words, at least two OOK symbols occupy one OFDM symbol.

Refer to FIG. 5. For example, FIG. 5 is another diagram of a waveform of a signal for which Manchester encoding is used. As shown in FIG. 5, original bits are "0 0 0 1". It is assumed that the original bit "0" is encoded as "10", and the original bit "1" is encoded as "01". In this case, encoded bits for which Manchester encoding is used are "10 10 10 10 01", and the waveform is shown in FIG. 5. In a length of one OFDM symbol (2192 sampling points in FIG. 5), eight OOK symbols are sent, which are respectively an ON symbol, an OFF symbol, an ON symbol, an OFF symbol, an ON symbol, an OFF symbol, an OFF symbol, and an ON symbol. When demodulating the signal, a receive side may compare relative values of signal powers (or signal amplitudes) in two adjacent OOK symbols, and determine, based on a comparison result, information bits obtained through demodulation.

To generate the foregoing waveform, in a possible implementation, a target waveform x in time domain is first determined, and then some operations such as discrete Fourier transform (discrete Fourier transform, DFT) and inverse fast Fourier transform (inverse fast Fourier transform, IFFT) are performed, to obtain a to-be-sent sequence.

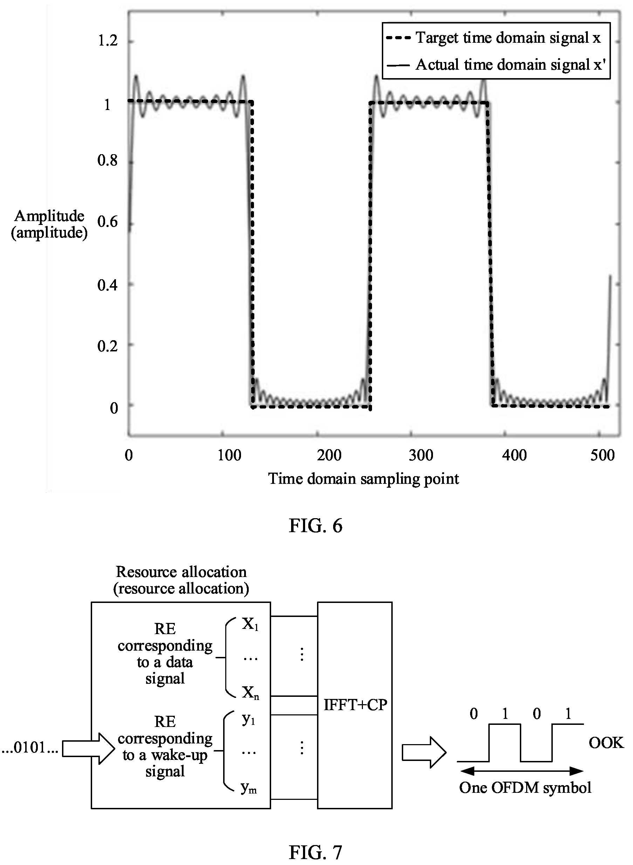

Refer to FIG. 6 and FIG. 7. For example, FIG. 6 and FIG. 7 are diagrams of an OOK symbol in time domain and frequency domain. As shown in FIG. 6, assuming that an "ON symbol-OFF symbol-ON symbol-OFF symbol" waveform needs to be generated, a target waveform may be set to: x=[1, 1, ..., 1, 0, 0, ..., 0, 1, 1, ..., 1, 0, 0, ..., 0], or x=[e^{jθ₁}, e^{jθ₂}, ..., e^{jθₙ}, 0, 0, ..., 0, e^{jθ₁}, e^{jθ₂}, ..., e^{jθₙ}, 0, 0, ..., 0]. That is, a part of amplitudes of the ON symbols is 1, and a part of phases of the ON symbols may be inconsistent, as shown in FIG. 6. As shown in FIG. 7, DFT may be performed on x to obtain a frequency domain sequence y corresponding to x; then y is mapped to a frequency resource (for example, a frequency resource corresponding to a wake-up signal); then IFFT is performed on a frequency domain signal; and a cyclic prefix (cyclic prefix, CP) is added to the IFFT-enabled signal to obtain a to-be-sent sequence x' (refer to a curve in FIG. 6). It can be learned from FIG. 6 that x and x' have similar shapes, and therefore at least two OOK symbols may be transmitted in the length of one OFDM symbol.

For the receive side, in a possible implementation, the signal may be received in an envelope detection manner or an energy detection manner. For example, a signal received by a receiver (referred to as an OOK receiver for differentiation) first passes through a matching network and a radio frequency (radio frequency, RF) filter to filter out out-of-band noise/interference; then a frequency mixer moves a spectrum to a baseband (baseband, BB), and a baseband filter further filters out out-of-band noise/interference; and then envelope detection/energy detection is performed on the signal (in this case, a value of a baseband signal is mathematically represented as a real number, and has only an amplitude but no phase). Specifically, the OOK receiver may determine whether the received signal is an ON symbol or an OFF symbol by detecting energy in different time ranges, and then subsequent processing is performed.

6. Low-power synchronization signal (low-power synchronization signal, LP-SS): can be used for implementing a synchronization function and an RRM measurement function.

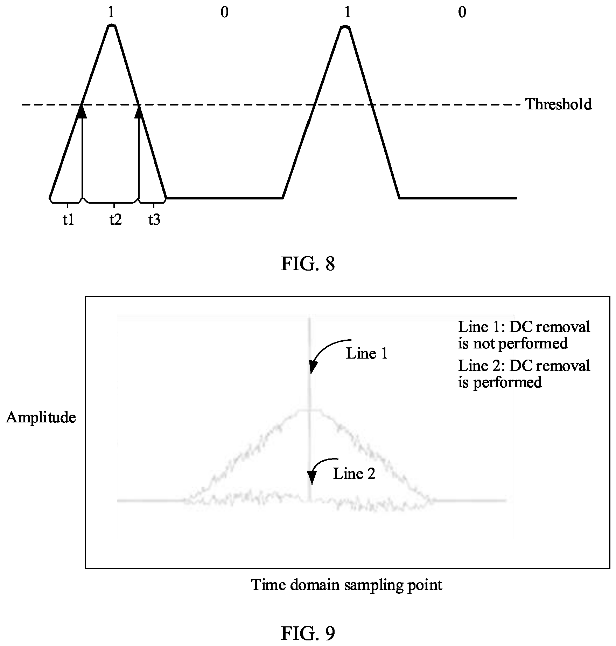

After a signal passes through a channel, distortion may occur due to impact of a channel state and the like. The waveform for which OOK modulation is used shown in FIG. 3 is used as an example. The waveform shown in FIG. 3 may become a waveform shown in FIG. 8 at the receive side.

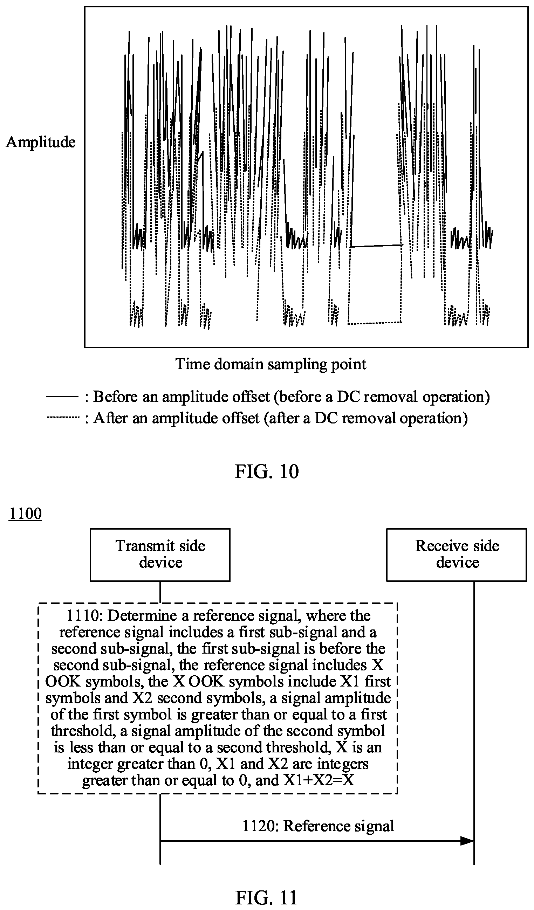

Refer to FIG. 8. For example, FIG. 8 is a diagram of a waveform of a signal that has passed through a channel. To determine whether the signal corresponds to a bit "0" or a bit "1", a terminal device may compare a level value of the received signal with a threshold (the threshold is shown by a dashed line in FIG. 11). For example, if the level value of the signal received by the terminal device is greater than the threshold, it indicates that the signal corresponds to the bit "1 ". If the level value of the signal received by the terminal device is less than the threshold, it indicates that the signal corresponds to the bit "0". As shown in FIG. 8, if a time position at which the terminal device compares the level value of the received signal with the threshold is within a range of t2, determining is accurate. If the time position at which the terminal device compares the level value of the received signal with the threshold is within a range of t1 or t3, determining is inaccurate, that is, 1 is incorrectly determined as 0.

Therefore, when the terminal device receives the wake-up signal through the wake-up circuit, to correctly receive the wake-up signal, time synchronization of the wake-up link needs to be obtained. That is, the terminal device may obtain a symbol boundary position, and determine, based on the boundary position, whether the signal corresponds to a time position of 0 or 1. For example, the terminal device may determine, by using a level value at a middle position of a symbol, whether the signal corresponds to 0 or 1. In addition, because local clock precision of the terminal device is limited, time drift may occur. If the wake-up link does not provide a synchronization function, after the terminal device works on the wake-up link for a period of time, a problem of time asynchronization between the terminal device and a network device (that is, symbol boundary positions considered by the terminal device and the network device are inconsistent) may occur. Consequently, signal receiving is affected.

To support the synchronization function, an LP-SS may be introduced. Specifically, the terminal device may complete the synchronization function based on the LP-SS. For example, the LP-SS is periodically sent.

For example, a modulation scheme of the LP-SS is OOK. That the modulation scheme of the LP-SS is the OOK may be alternatively described as follows: In a time interval corresponding to the LP-SS, there is energy at some time domain positions, and there is no energy at some time domain positions.

In addition, a pattern (pattern) (or referred to as a mode or design) of ON symbols/OFF symbols of the LP-SS may follow a specific order to enhance detection performance of the LP-SS. For example, the LP-SS may be generated based on a binary sequence (binary sequence) having a good autocorrelation characteristic.

The good autocorrelation characteristic of the binary sequence means that a correlation between the sequence and the sequence is high and a correlation between the sequence and a cyclic shift of the sequence is low. Specifically, when correlation is performed between the sequence and each cyclic shift sequence of the sequence, there is a correlation peak near a position at which a cyclic shift value is equal to 0 (that is, when correlation is performed between the sequence and the sequence), and a correlation value at another position is close to 0. A gold sequence, an m-sequence, a PN sequence, and the like are all binary sequences having good autocorrelation characteristics. A direct current (direct current) removal operation (that is, from {0, 1} to {-1, +1}, which may alternatively be referred to as a polarization mapping operation) is performed on the binary sequence, so that there may be positive and negative products between sequences, and the products may cancel each other (that is, positive and negative cancellation), thereby implementing the foregoing effect. On the contrary, if the DC removal operation is not performed, the peak-to-average ratio of a correlation result is small, and a correlation is poor.

Refer to FIG. 9. For example, FIG. 9 is a diagram of performing autocorrelation on a binary sequence. As shown in FIG. 9, if a DC removal operation is not performed (for example, a line 1 in FIG. 9), because there is no positive and negative cancellation, there is a slowly rising "slope" on both sides of a real peak. In this way, a value of the peak is smaller than an average (that is, a peak-to-average ratio) of all correlation values. If the DC removal operation (for example, a line 2 in FIG. 9) is performed, because there is a good autocorrelation characteristic of the binary sequence (for example, a gold sequence), and all correlation values at non-peak positions fluctuate in a small range around 0, a peak-to-average ratio is greater. In addition, noise is not considered in the example shown in FIG. 9. Therefore, the curve shown in FIG. 9 represents a case in which a signal-to-noise ratio is extremely high. Alternatively, when the noise exists, especially when the signal-to-noise ratio is low, a sequence with a small peak-to-average ratio is more likely to be affected by the noise. That is, it is more likely that a position that is not for a real peak is incorrectly determined as that for the peak due to the noise, thereby causing a synchronization error. The curve shown in FIG. 9 is merely an example, and does not limit the protection scope of embodiments of this application.

Refer to FIG. 10. For example, FIG. 10 is a diagram of performing a DC removal operation. As shown in FIG. 10, a receive side may first perform DC estimation, that is, estimate an amplitude average of a received signal, and then perform an amplitude offset on the whole received signal based on an estimation result. However, if the amplitude average is not correctly estimated, the receive side may not be capable of correctly removing a DC, and it is equivalent to adding an incorrect amplitude offset on a processed signal. When such a signal is used for correlation, a good autocorrelation characteristic of a sequence cannot be used, thereby reducing synchronization performance. A curve shown in FIG. 10 is merely an example, and does not limit the protection scope of embodiments of this application.

In view of this, a special design may be considered for a reference signal (for example, an LP-SS), to improve performance of the reference signal. For example, if the reference signal is a reference signal (for example, the LP-SS) used for synchronization, synchronization performance of the reference signal can be improved by using the solutions provided in embodiments of this application.

It should be noted that in this application, "indicate" may include direct indication, indirect indication, explicit indication, and implicit indication. When a specific piece of indication information is described as indicating A, it may be understood as that the indication information carries A, directly indicates A, or indirectly indicates A.

In this application, information indicated by the indication information is referred to as to-be-indicated information. In a specific implementation process, there are a plurality of manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

In addition, in this application, the expression "/" is used to indicate that the associated objects are in an "or" relationship. For example, A/B may represent A or B. The expression "and/or" is used to represent that associated objects may be an "and" association relationship, or may be an "or" association relationship. For example, A and/or B may represent the following cases: Only A exists, only B exists, and both A and B exist, where A and B may be one or more. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural.

The following describes in detail the method provided in embodiments of this application with reference to the accompanying drawings. Embodiments provided in this application may be applied to a scenario shown in the foregoing figure. This is not limited.

Refer to FIG. 11. For example, FIG. 11 is a diagram of a communication method 1100 according to an embodiment of this application. For ease of description, an example in which the method 1100 is performed by a transmit side device (for example, a terminal device, and for another example, a network device) is used below for description. It may be understood that the method 1100 may alternatively be performed by a component of the transmit side device, for example, a chip, a chip system, or a circuit. This is not limited herein. The steps described below as being performed by a single execution body may alternatively be performed by a plurality of execution bodies. These execution bodies may be logically and/or physically separated. The method 1100 shown in FIG. 11 may include the following steps.

The method 1100 includes step 1120. Optionally, the method 1100 includes step 1110.

1110: The transmit side device determines a reference signal.

The reference signal includes a first sub-signal and a second sub-signal, and the first sub-signal is before the second sub-signal.

The first sub-signal and the second sub-signal may also be referred to as a first part and a second part. Specifically, the reference signal includes at least two parts. For differentiation, one part is referred to as the first sub-signal, and the other part is referred to as the second sub-signal. Related solutions of the first sub-signal and the second sub-signal are described in detail below.

A modulation scheme of the reference signal is OOK modulation.

That the modulation scheme of the reference signal is the OOK modulation may also be expressed as follows: The reference signal includes X OOK symbols, the X OOK symbols include X1 first symbols and X2 second symbols, a signal amplitude of the first symbol is greater than or equal to a first threshold, and a signal amplitude of the second symbol is less than or equal to a second threshold. X is an integer greater than 0, X1 and X2 are integers greater than or equal to 0, and X1+X2=X.

For example, determining the reference signal includes: determining sending time of the reference signal, generating the reference signal, or obtaining the prestored reference signal from a memory.

For example, the reference signal is a synchronization reference signal. For example, the reference signal is an LP-SS.

1120: The transmit side device sends the reference signal. Correspondingly, a receive side device receives the reference signal.

For example, the reference signal is periodically sent.

For example, sending the reference signal includes: sending the reference signal at the sending time of the reference signal, or sending the reference signal based on the sending time of the reference signal. Specifically, the transmit side device determines the sending time of the reference signal, and then sends the reference signal at the sending time of the reference signal, or sends the reference signal based on the sending time of the reference signal. Similarly, receiving the reference signal includes: receiving the reference signal based on the sending time of the reference signal.

In a possible case, the transmit side device is a network device, and the receive side device is a terminal device. In this case, the reference signal is a downlink reference signal.

In another possible case, the transmit side device is a terminal device, and the receive side device is a network device. In this case, the reference signal is an uplink reference signal.

In another possible case, both the transmit side device and the receive side device are terminal devices. In this case, the reference signal is a sidelink reference signal.

It may be understood that specific forms of the receive side device and the transmit side device do not limit the protection scope of embodiments of this application.

Optionally, the method 1100 further includes: The receive side device processes the reference signal.

In a possible case, the receive side device performs time synchronization based on the reference signal, for example, determines downlink timing.

In another possible case, the receive side device performs radio resource management (radio resource management, RRM) measurement (RRM measurement) based on the reference signal. For example, the RRM measurement (or may be referred to as cell measurement) includes serving cell (serving cell) measurement and neighbor cell (neighbor cell) measurement. For example, the neighbor cell measurement includes: intra-frequency (intra-frequency) measurement, inter-frequency (inter-frequency) measurement, and inter-radio access technology (inter-radio access technology, inter-RAT) measurement.

The following first describes the first symbol and the second symbol.

The first symbol may also be referred to as an ON symbol, and the second symbol may also be referred to as an OFF symbol. For the ON symbol and the OFF symbol, refer to the descriptions in the foregoing term explanation. Details are not described herein again.

That the signal amplitude of the first symbol is greater than or equal to the first threshold, and the signal amplitude of the second symbol is less than or equal to the second threshold may be replaced with any one of the following: The signal amplitude of the first symbol is greater than the signal amplitude of the second symbol; the signal amplitude of the first symbol is greater than the signal amplitude of the second symbol in a preset time period; a signal power of the first symbol is higher than a signal power of the second symbol; a signal power of the first symbol is higher than a signal power of the second symbol in a preset time period; a signal power of the first symbol is greater than or equal to a first threshold, and a signal power of the second symbol is less than or equal to a second threshold; in a preset time period, a signal power of the first symbol is greater than or equal to a first threshold, and a signal power of the second symbol is less than or equal to a second threshold; a signal level value of the first symbol is greater than a signal level value of the second symbol; a signal level value of the first symbol is greater than a signal level value of the second symbol in a preset time period; a signal level value of the first symbol is greater than or equal to a first threshold, and a signal level value of the second symbol is less than or equal to a second threshold; in a preset time period, a signal level value of the first symbol is greater than or equal to a first threshold, and a signal level value of the second symbol is less than or equal to a second threshold; or the first symbol indicates (or corresponds to, or represents) a first bit value, and the second symbol indicates (or corresponds to, or represents) a second bit value. The first bit value is different from the second bit value. In an example, the first bit value is "1", and the second bit value is "0". In another example, the first bit value is "0", and the second bit value is "1". In the following embodiments, for ease of description, an example in which the first bit value is "1" and the second bit value is "0" is used for description. Using the example shown in FIG. 3 as an example, the reference signal includes four OOK symbols, the four OOK symbols include two first symbols and two second symbols, a 1^{st} OOK symbol and a 3^{rd} OOK symbol are the first symbols, and a first bit value indicated by the first symbols is "1"; and a 2^{nd} OOK symbol and a 4^{th} OOK symbol are the second symbols, and a second bit value indicated by the second symbols is "0".

The following uses the signal power as an example to describe two examples.

In an example, the signal power of the first symbol is not 0, and the signal power of the second symbol is 0. Based on this, it can be learned that the modulation scheme of the reference signal is the OOK modulation. If the signal power of the first symbol is not 0, it indicates that the signal amplitude of the first symbol is not 0. That is, a signal is transmitted in a time unit (for example, an OOK symbol). If the signal power of the second symbol is 0, it indicates that the signal amplitude of the second symbol is 0. That is, no signal is transmitted in a time unit (for example, an OOK symbol).

In another example, the signal power of the first symbol is greater than or equal to the first threshold, the signal power of the second symbol is less than or equal to the second threshold, and the first threshold is greater than or equal to the second threshold. Due to a non-ideal characteristic of an electronic component, even if a power of a signal expected to be transmitted is 0, a power of an actually transmitted signal may be greater than 0. Therefore, when the signal power of the second symbol is less than or equal to the second threshold, it may be approximately considered that the signal power of the second symbol is 0. Based on this, it can be learned that the modulation scheme of the reference signal is the OOK modulation.

The foregoing uses the signal power as an example for description. It may be understood that the foregoing signal power may alternatively be replaced with the signal level value. In addition, the foregoing signal power may alternatively be a signal power in a period of time (for example, the preset time period). The preset time period may be predefined, preconfigured, pre-agreed, or pre-stored.

For example, the first threshold is greater than or equal to the second threshold. The first threshold and the second threshold may be predefined, preconfigured, pre-agreed, or pre-stored.

It may be understood that, in this embodiment of this application, the signal powers, the signal amplitudes, and the signal level values of the first symbol and the second symbol, and the bit values indicated by the first symbol and the second symbol may indicate that OOK modulation is performed on the reference signal. This is not limited herein. In addition, another manner that can indicate that OOK modulation is performed on the reference signal is also applicable to this embodiment of this application. This does not necessarily need to be limited to the first symbol and the second symbol, and even need to be limited to the OOK symbol.

It may be further understood that, for brevity, the first threshold and the second threshold are used for comparison with the signal amplitude, the signal power, and the signal level value. It may be understood that thresholds used for comparison with the signal amplitude, the signal power, and the signal level value may be different. For example, a first threshold A and a second threshold A are compared with the signal amplitude, a first threshold B and a second threshold B are compared with the signal power, and a first threshold C and a second threshold C are compared with a signal level.

The following describes related solutions of the first sub-signal and the second sub-signal.

For the reference signal, at least the following two implementations may be included.

In a first possible implementation, the second sub-signal in the reference signal is determined based on a first sequence. In other words, the second sub-signal is generated based on the first sequence. In this case, it may also be considered that the reference signal is obtained by splicing the first sub-signal and the second sub-signal. In other words, the first sub-signal and the second sub-signal may be separately designed, and then combined together to be used as the reference signal for transmission. Alternatively, the first sub-signal in the reference signal may be determined based on a second sequence. That is, it may be considered as that the reference signal is determined based on a third sequence, where the third sequence is obtained by splicing the first sequence and the second sequence, and the second sequence is before the first sequence. Further, the receive side device may determine the first sub-signal based on the second sequence, that is, determine distribution (or distribution of "0" and "1 ") of the first symbol (that is, the ON symbol) and the second symbol (that is, the OFF symbol) in the OOK symbol.

For example, the first sequence is a binary sequence. For example, the first sequence is a binary sequence having a good autocorrelation characteristic.

For example, a correlation value between the first sequence and the first sequence is greater than or equal to a third threshold, and a correlation value between the first sequence and a cyclic shift of the first sequence is less than or equal to a fourth threshold. Based on this, it can be learned that the first sequence has a high correlation with the first sequence, and has a low correlation with the cyclic shift of the first sequence. That is, the first sequence is the binary sequence having the good autocorrelation characteristic. The third threshold and the fourth threshold may be predefined, preconfigured, pre-agreed, or pre-stored.

For example, the first sequence is any one of the following: a gold sequence, an m-sequence, and a PN sequence. It may be understood that a specific manner of the first sequence is not limited. For example, any sequence having an autocorrelation characteristic is applicable to this embodiment of this application.

Based on this implementation, optionally, the method 1100 further includes: The receive side device performs time synchronization based on the second sub-signal.

In a second possible implementation, the reference signal is determined based on the first sequence. In other words, the reference signal is generated based on the first sequence. That is, the first sub-signal and the second sub-signal are generated based on the first sequence. In this case, a signal (that is, the reference signal) is generated based on a sequence (that is, the first sequence). For differentiation and ease of description, the signal is divided into the first sub-signal and the second sub-signal. Alternatively, in this case, the reference signal may be determined based on a first subsequence and a second subsequence. That is, the first sequence includes the first subsequence and the second subsequence, a first sub-signal is determined based on the first subsequence, and a second sub-signal is determined based on the second subsequence.

Based on this implementation, optionally, the receive side device performs time synchronization based on the first sub-signal and the second sub-signal.

The foregoing briefly describes the reference signal and the second sub-signal in the reference signal. The following provides detailed descriptions with reference to the first sub-signal.

For example, the first sub-signal may be used for determining (or referred to as estimating) a signal amplitude (or referred to as a signal amplitude average, or referred to as an estimated value of a DC) of the reference signal or the second sub-signal. In this way, the receive side device may perform a DC removal operation based on a determining result.

For example, the foregoing first possible implementation is used as an example. That is, the second sub-signal in the reference signal is determined based on the first sequence. In this case, the first sub-signal may be used for determining the signal amplitude of the second sub-signal.

For another example, the foregoing second possible implementation is used as an example. That is, the reference signal is determined based on the first sequence. In this case, the first sub-signal may be used for determining the signal amplitude of the reference signal.

That the first sub-signal is before the second sub-signal may also be expressed as follows: The first sub-signal is a header (header) of the reference signal, and the second sub-signal is a body (body) of the reference signal.

Optionally, the first sub-signal includes Y OOK symbols, the Y OOK symbols include Y1 first symbols and Y2 second symbols, Y is an integer greater than 1 and less than X, Y1 and Y2 are integers greater than or equal to 0, and Y1+Y2=Y. For the first symbol and the second symbol, refer to the foregoing descriptions. Details are not described herein again.

In a possible implementation, Y1 and Y2 satisfy any one of the following: Y1=Y, and Y2=0; Y1=Y2; $Y 1 = \left⌈Y/2\right⌉$, and $Y 2 = \left⌊Y/2\right⌋$; or $Y 1 = \left⌊Y/2\right⌋$, and $Y 2 = \left⌈Y/2\right⌉$. ┌ ┐ represents ceiling, and ┌ ┐ represents floor. It may be understood that, └ ┘ or ┌ ┐ may alternatively be replaced with another rounding manner.

The following provides descriptions with reference to two cases.

In a first possible case, Y1=Y, and Y2=0.

Based on this, the first sub-signal includes the Y OOK symbols, and the Y OOK symbols are all first symbols (that is, ON symbols). That is, the first sub-signal is at a continuous high level.

In a possible implementation, the second sub-signal is determined based on the first sequence, and the first sub-signal includes Y first symbols. Specifically, the reference signal includes two parts: the header and the body. The header may serve as an automatic gain control (automatic gain control, AGC) area, a signal in the AGC area is the first sub-signal, and the first sub-signal includes the Y first symbols. The body part is the second sub-signal, and the second sub-signal is determined based on the first sequence.

The signal in the AGC area may be used for estimating the signal amplitude (or referred to as the signal amplitude average, or referred to as the estimated value of the DC), that is, a signal amplitude of the body part.

A signal in the body part may be used by the receive side device to process the reference signal, for example, perform time synchronization.

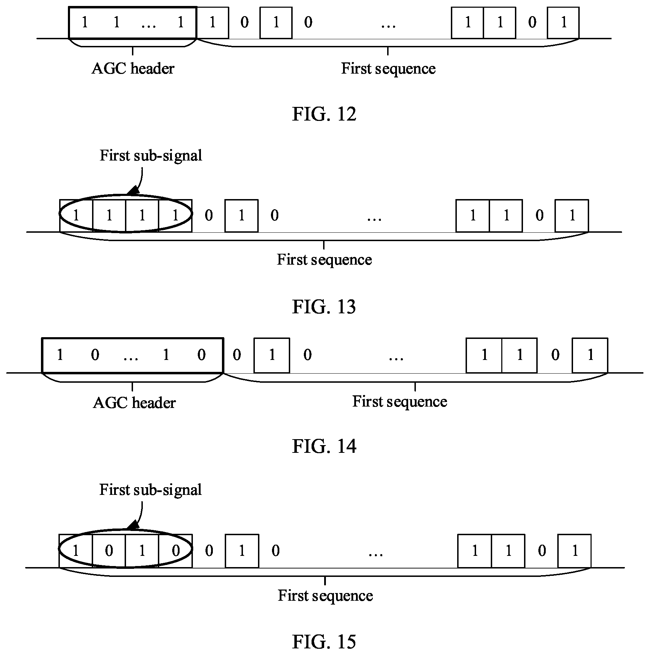

Refer to FIG. 12. For example, FIG. 12 is a diagram of a first sub-signal. In FIG. 12, "1" indicates that a signal is transmitted in an OOK symbol. That is, the OOK symbol is a first symbol (that is, an ON symbol). "0" indicates that no signal is transmitted in the OOK symbol. That is, the OOK symbol is a second symbol (that is, an OFF symbol). As shown in FIG. 12, a reference signal includes two parts: an AGC header and a body. An AGC header area has only first symbols, and the body part is generated based on a first sequence (for example, a gold sequence, an m-sequence, or a PN sequence).

Based on this implementation, the receive side device may perform time synchronization based on the second sub-signal. For example, FIG. 12 is used as an example. The receive side device may perform time synchronization based on a signal in the body part. For example, the receive side device may perform time synchronization based on a signal obtained by subtracting P/2 from the signal amplitude of the second sub-signal, where P represents the signal amplitude average determined based on the first sub-signal. For example, FIG. 12 is used as an example. The receive side device may first perform DC estimation by using the signal in the AGC header area, for example, calculate an amplitude average (for example, denoted as P) in an AGC header length. Then, the receive side device may subtract P/2 from a signal amplitude of the body part, to complete a DC removal operation, and may perform time synchronization based on the signal obtained by subtracting P/2 from the signal amplitude.

In another possible implementation, the reference signal is determined based on the first sequence, and the first sub-signal includes the Y first symbols. Based on this implementation, when the binary sequence having the good autocorrelation characteristic is constructed, a specific sequence starting with consecutive "1s" may be constructed through cyclic shifting. That is, a start part of the reference signal has only first symbols.

Specifically, by using a specific cyclic shift value, a part (that is, a segment of sequence that has only the first symbols) with the consecutive "1s" is exactly at the start of the sequence. Each cyclic shift of the binary sequence having the good autocorrelation characteristic is a binary sequence having a good autocorrelation characteristic. When a length of the binary sequence is long, there is a high probability of finding a part with consecutive "1s". Therefore, by using the specific cyclic shift value, the part with the consecutive "1s" may be exactly at the start of the sequence.

Refer to FIG. 13. For example, FIG. 13 is another diagram of a first sub-signal. In FIG. 13, "1" indicates that a signal is transmitted in an OOK symbol. That is, the OOK symbol is a first symbol (that is, an ON symbol). "0" indicates that no signal is transmitted in the OOK symbol. That is, the OOK symbol is a second symbol (that is, an OFF symbol). As shown in FIG. 13, a reference signal is generated based on a first sequence (for example, a gold sequence, an m-sequence, or a PN sequence), and OOK symbols at a start position are only ON symbols.

Based on this implementation, the receive side device may perform time synchronization based on the first sub-signal and the second sub-signal. For example, FIG. 13 is used as an example. The receive side device may perform time synchronization based on the first sequence. For example, the receive side device may perform time synchronization based on a signal obtained by subtracting P/2 from the signal amplitude of the reference signal (that is, the first sub-signal and the second sub-signal), where P represents the signal amplitude average determined based on the first sub-signal. For example, FIG. 13 is used as an example. The receive side device may first perform DC estimation by using a signal in an AGC header area, for example, calculate an amplitude average (for example, denoted as P) in an AGC header length. Then, the receive side device may subtract P/2 from the signal amplitude of the entire reference signal, to complete a DC removal operation, and may perform time synchronization based on the signal obtained by subtracting P/2 from the signal amplitude.

In a second possible case, Y1=Y2=Y/2; $Y 1 = \left⌈Y/2\right⌉$, and $Y 2 = \left⌊Y/2\right⌋$; or $Y 1 = \left⌊Y/2\right⌋$, and $Y 2 = \left⌈Y/2\right⌉$.

Based on this, the first sub-signal includes the Y OOK symbols, and the first symbol and the second symbol in the Y OOK symbols each occupy 50% or approximately 50%. That is, the first sub-signal is a signal in which there is a balance between the ON symbol and the OFF symbol.

In a possible implementation, the second sub-signal is determined based on the first sequence, and the first sub-signal includes the Y1 first symbols and the Y2 second symbols. Specifically, the reference signal includes two parts: a header and a body. The header is an AGC area, a signal in the AGC area is the first sub-signal, and the first sub-signal includes the Y1 first symbols and the Y2 second symbols. The body part is the second sub-signal, and the second sub-signal is determined based on the first sequence.

The signal in the AGC area may be used for estimating the signal amplitude (or referred to as the signal amplitude average, or referred to as the estimated value of the DC), that is, a signal amplitude of the body part.

A signal in the body part may be used by the receive side device to process the reference signal, for example, perform time synchronization.

Refer to FIG. 14. For example, FIG. 14 is another diagram of a first sub-signal. In FIG. 14, "1" indicates that a signal is transmitted in an OOK symbol. That is, the OOK symbol is a first symbol (that is, an ON symbol). "0" indicates that no signal is transmitted in the OOK symbol. That is, the OOK symbol is a second symbol (that is, an OFF symbol). As shown in FIG. 14, a reference signal includes two parts: an AGC header and a body. An AGC header area has symbols that alternate between "0" and "1", and the body part is generated based on a first sequence (for example, a gold sequence, an m-sequence, or a PN sequence).

Based on this implementation, the receive side device may perform time synchronization based on the second sub-signal. For example, FIG. 14 is used as an example. The receive side device may perform time synchronization based on a signal in the body part. For example, the receive side device may perform time synchronization based on a signal obtained by subtracting P from the signal amplitude of the second sub-signal, where P represents the signal amplitude average determined based on the first sub-signal. For example, FIG. 14 is used as an example. The receive side device may first perform DC estimation by using a signal in the AGC header area, for example, calculate an amplitude average (for example, denoted as P) in an AGC header length. Then, the receive side device may subtract P from a signal amplitude of the body part, to complete a DC removal operation, and may perform time synchronization based on the signal obtained by subtracting P from the signal amplitude.

In another possible implementation, the reference signal is determined based on the first sequence, and the first sub-signal includes the Y1 first symbols and the Y2 second symbols. Based on this implementation, when the binary sequence having the good autocorrelation characteristic is constructed, a specific sequence whose start is balanced between "0" and "1" may be constructed through cyclic shifting. That is, one half of a start part of the reference signal is the first symbol and the other half of the start part is the second symbol. For the first sequence, refer to the foregoing descriptions. Details are not described herein again.

Specifically, by using a specific cyclic shift value, a part (that is, a segment of sequence in which one half is the first symbol and the other half is the second symbol) balanced between "0" and "1" is exactly at the start of the sequence.

Refer to FIG. 15. For example, FIG. 15 is another diagram of a first sub-signal. In FIG. 15, "1" indicates that a signal is transmitted in an OOK symbol. That is, the OOK symbol is a first symbol (that is, an ON symbol). "0" indicates that no signal is transmitted in the OOK symbol. That is, the OOK symbol is a second symbol (that is, an OFF symbol). As shown in FIG. 15, a reference signal is generated based on a first sequence (for example, a gold sequence, an m-sequence, or a PN sequence), and OOK symbols at a start position are symbols that alternate between "0" and "1".

Based on this implementation, the receive side device may perform time synchronization based on the first sub-signal and the second sub-signal. For example, FIG. 15 is used as an example. The receive side device may perform time synchronization based on the first sequence. For example, the receive side device may perform time synchronization based on a signal obtained by subtracting P from the signal amplitude of the reference signal (that is, the first sub-signal and the second sub-signal), where P represents the signal amplitude average determined based on the first sub-signal. For example, FIG. 15 is used as an example. The receive side device may first perform DC estimation by using a signal in an AGC header area, for example, calculate an amplitude average (for example, denoted as P) in an AGC header length. Then, the receive side device may subtract P from the signal amplitude of the entire reference signal, to complete a DC removal operation, and may perform time synchronization based on the signal obtained by subtracting P from the signal amplitude.

It may be understood that the foregoing provides examples for description with reference to the two cases, and this is not limited herein. For example, both Y1 and Y2 are greater than 0, and Y1 and Y2 are not equal. For another example, the alternation between "0" and "1" shown in FIG. 15 is merely an example, provided that "0" and "1" are balanced (that is, quantities of "0" and "1" are equal or approximately equal). Specific positions of "0" and "1" are not limited.

As described earlier, the OOK modulation may be used for both the reference signal (for example, the LP-SS) and the wake-up signal. The following describes in detail a related solution of the length of the OOK symbol in the reference signal and the length of the OOK symbol in the wake-up signal with reference to a method 1600. The method 1600 described below may be used in combination with the method 1100, or may be used independently. This is not limited herein.

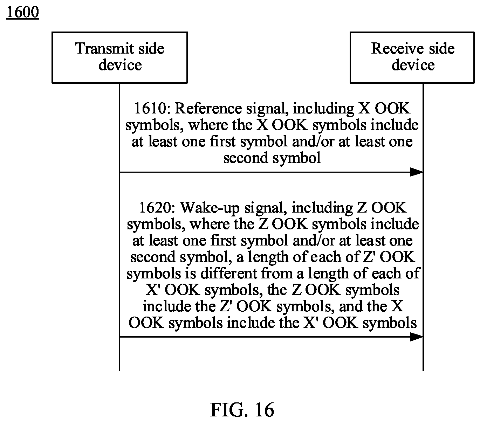

Refer to FIG. 16. For example, FIG. 16 is a diagram of another communication method 1600 according to an embodiment of this application. For ease of description, an example in which the method 1600 is performed by a transmit side device (for example, a terminal device, and for another example, a network device) is used below for description. It may be understood that the method 1600 may alternatively be performed by a component of the transmit side device, for example, a chip, a chip system, or a circuit. This is not limited herein. The steps described below as being performed by a single execution body may alternatively be performed by a plurality of execution bodies. These execution bodies may be logically and/or physically separated. The method 1600 shown in FIG. 16 may include the following steps.

1610: The transmit side device sends a reference signal. Correspondingly, a receive side device receives the reference signal.

The reference signal includes X OOK symbols, and the X OOK symbols include at least one first symbol and/or at least one second symbol. X is an integer greater than 0.

1620: The transmit side device sends a wake-up signal. Correspondingly, the receive side device receives the wake-up signal.

The wake-up signal includes Z OOK symbols, the Z OOK symbols include at least one first symbol and/or at least one second symbol, the Z OOK symbols include Z' OOK symbols, the X OOK symbols include X' OOK symbols, and a length of each of the Z' OOK symbols is different from a length of each of the X' OOK symbols.

Z, Z', and X' are integers greater than 0, Z' is less than or equal to Z, and X' is less than or equal to X.

That the length of each of the Z' OOK symbols is different from the length of each of the X' OOK symbols may alternatively be replaced with that a quantity of OOK symbols corresponding to the wake-up signal in one time unit is different from a quantity of OOK symbols corresponding to the reference signal in one time unit. For example, the quantity of OOK symbols corresponding to the wake-up signal in one time unit is greater than the quantity of OOK symbols corresponding to the reference signal in one time unit. For example, one time unit may be one OFDM symbol.

For example, X'=X, and Z'=Z. Based on this, a length of each OOK symbol in the wake-up signal is different from a length of each OOK symbol in the reference signal.

Specifically, performance of the reference signal is related to the length of OOK symbol in the reference signal. For example, the reference signal is a synchronization signal. Synchronization performance is related to a steep degree of a correlation peak. Specifically, a steeper correlation peak indicates higher synchronization precision. Steepness of the correlation peak is related to the length of the OOK symbol in the synchronization signal.

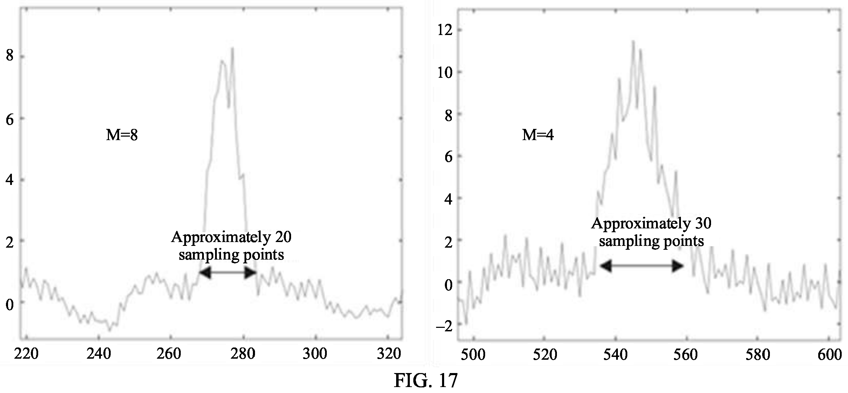

Refer to FIG. 17. For example, FIG. 17 is a diagram of a synchronization signal correlation result. In FIG. 17, M represents a quantity of OOK symbols included in one OFDM symbol. Specifically, in (a) in FIG. 17, M=8 indicates that one OFDM symbol includes eight OOK symbols; and in (b) in FIG. 17, M=4 indicates that one OFDM symbol includes four OOK symbols. Apparently, in comparison with a case in which M=4, an OOK symbol is shorter in a case in which M=8. It can be learned from FIG. 17 that, in comparison with the case in which M=4, a width of a correlation peak is narrower in the case in which M=8.

In addition, performance (for example, demodulation performance) of the wake-up signal is related to the length of the OOK symbol in the wake-up signal. Usually, a shorter length of the OOK symbol in the wake-up signal indicates poorer performance of the wake-up signal.

It can be learned from the foregoing that, if the performance of the reference signal (for example, synchronization performance of an LP-SS) needs to be improved, a shorter length of the OOK symbol is better; and if the performance of the wake-up signal (for example, the demodulation performance of the wake-up signal) needs to be improved, a longer length of the OOK symbol is better. Based on this, it may be designed that Z is not equal to X. To be specific, the length of the OOK symbol included in the reference signal is different from the length of the OOK symbol included in the wake-up signal. In this way, an OOK symbol of an appropriate length may be selected based on respective actual situations.

It may be understood that there is no strict sequence between steps 1610 and 1620. For example, step 1610 may be performed first, and then step 1620 is performed; step 1620 may be performed first, and then step 1610 is performed; or step 1610 and step 1620 may be performed simultaneously.

Optionally, the length of each of the Z' OOK symbols is longer than the length of each of the X' OOK symbols. For example, X'=X and Z'=Z. To be specific, a length of each OOK symbol in the wake-up signal is longer than a length of each OOK symbol in the reference signal. In other words, the length of each OOK symbol in the reference signal is shorter than the length of each OOK symbol in the wake-up signal. In other words, a quantity of OOK symbols corresponding to the wake-up signal included in one OFDM symbol is greater than a quantity of OOK symbols corresponding to the reference signal.

As described above, a shorter length of the OOK symbol indicates better performance of the reference signal (for example, the synchronization performance of the LP-SS), and a longer length of the OOK symbol indicates better performance of the wake-up signal (for example, the demodulation performance of the wake-up signal). Therefore, it may be designed that the length of each of the Z' OOK symbols is longer than the length of each of the X' OOK symbols.

Optionally, the method 1600 further includes: The transmit side device sends first indication information and/or second indication information.

The first indication information indicates a length of at least one of the Z OOK symbols, and the second indication information indicates a length of at least one of the X OOK symbols. Based on this, the receive side device may learn of the length of each OOK symbol in the wake-up signal based on the first indication information, and learn of the length of each OOK symbol in the reference signal based on the second indication information.

For example, the first indication information indicates a length of each of the Z OOK symbols, and the second indication information indicates a length of each of the X OOK symbols.

For another example, the first indication information is used as an example. The first indication information indicates a length of a specific OOK symbol in the Z OOK symbols, and the receive side device may learn of the length of each of the Z OOK symbols based on the length of the specific OOK symbol. For example, lengths of OOK symbols in the wake-up signal are the same. Therefore, the receive side device may learn of a length of a specific OOK symbol in the Z OOK symbols based on the first indication information. A case of the second indication information is similar, and details are not described herein again.

That the indication information indicates the length of the OOK symbol may include: The indication information directly indicates the length of the OOK symbol; or may include: The indication information indirectly indicates the length of the OOK symbol.

That the indication information directly indicates the length of the OOK symbol may be that the indication information includes the length of the OOK symbol. For example, the first indication information is used as an example. The first indication information may include the length of the at least one of the Z OOK symbols.

That the indication information indirectly indicates the length of the OOK symbol may be that the indication information includes a quantity of OOK symbols. For example, the indication information includes a quantity of OOK symbols in one time unit (for example, one OFDM symbol), and the receive side device may determine the length of the OOK symbol based on the quantity of OOK symbols. For example, the second indication information is used as an example. The second indication information may include the quantity of OOK symbols (a value of M shown in FIG. 17) corresponding to the reference signal in one OFDM symbol.

That the transmit side device sends the first indication information and/or the second indication information includes the following several implementations.

In a first possible implementation, the transmit side device sends the first indication information. Correspondingly, the receive side device receives the first indication information.

Based on this, the receive side device may directly learn of the length of each OOK symbol in the wake-up signal (that is, the length of each of the Z OOK symbols) based on the first indication information, and the receive side device may further indirectly learn of the length of each OOK symbol in the reference signal (that is, the length of each of the X OOK symbols) based on the first indication information.

For example, it is assumed that the OOK symbol in the wake-up signal is referred to as a first OOK symbol, the OOK symbol in the reference signal is referred to as a second OOK symbol, and a length of the first OOK symbol and a length of the second OOK symbol are related (for example, satisfy a preset relationship). In this way, the receive side device may learn of the length of the second OOK symbol based on the length of the first OOK symbol. The preset relationship may be predefined, preconfigured, pre-agreed, or pre-stored.

In a second possible implementation, the transmit side device sends the second indication information. Correspondingly, the receive side device receives the second indication information.

Based on this, the receive side device may directly learn of the length of each OOK symbol in the reference signal (that is, the length of each of the X OOK symbols) based on the second indication information, and the receive side device may further indirectly learn of the length of each OOK symbol in the wake-up signal (that is, the length of each of the Z OOK symbols) based on the second indication information. For this manner, refer to the foregoing first possible manner. Details are not described herein again.

In a third possible implementation, the transmit side device sends the first indication information and the second indication information. Correspondingly, the receive side device receives the first indication information and the second indication information.

Based on this, the receive side device may directly learn of the length of each OOK symbol in the wake-up signal (that is, the length of each of the Z OOK symbols) based on the first indication information, and directly learn of the length of each OOK symbol in the reference signal (that is, the length of each of the X OOK symbols) based on the second indication information.

The first indication information and the second indication information may be carried in one piece of signaling, or may be carried in different pieces of signaling. This is not limited herein.

It may be understood that in the method 1600, an example in which a device sending the reference signal and a device sending the first indication information and the second indication information are a same device is used for description. This is not limited herein. For example, the device sending the reference signal and the device sending the first indication information and the second indication information may be different devices.

It may be understood that, in embodiments of this application, "receiving" may alternatively be replaced with "detecting", "reading", or "monitoring". For example, "receiving a reference signal" may alternatively be replaced with "detecting a reference signal", "reading a reference signal", or "monitoring a reference signal".

It may be further understood that in some of the foregoing embodiments, the main circuit and the wake-up circuit are mainly used as examples for description. This application is not limited thereto. For example, the "wake-up circuit" may alternatively be replaced with the "first module", may be replaced with the "wake-up link", may be replaced with "in a first state", or may be replaced with "in a first mode". For example, "the terminal device receives a signal by using the wake-up circuit" may be replaced with "the terminal device receives a signal by using the first module or the terminal device receives a signal on the wake-up link". The "main circuit" may alternatively be replaced with the "second module", may be replaced with the "main link", may be replaced with "in a second state", or may be replaced with "in a second mode". For example, "the terminal device receives a signal by using the main circuit" may be replaced with "the terminal device receives a signal by using the second module or the terminal device receives a signal on the main link".

It may be further understood that, in some of the foregoing embodiments, "transmitting" is mentioned. Unless otherwise specified, transmitting includes receiving and/or sending. For example, transmitting a signal may include receiving a signal and/or sending a signal.

It may be further understood that, in embodiments of this application, for ease of description, a device that sends a signal (for example, the reference signal, and for another example, the wake-up signal) is referred to as the transmit side device, and a device that receives a signal is referred to as the receive side device. Names and specific forms of the transmit side device and the receive side device do not limit the protection scope of embodiments of this application. For example, the transmit side device may be a terminal device or a network device, and the receive side device may be a terminal device or a network device.

It may be further understood that, in some of the foregoing embodiments, signal sending is mentioned for a plurality of times. That A sends a signal to B is used as an example. That A sends the signal to B may include that A directly sends the signal to B, or may include that A sends the signal to B via another device or network element. This is not limited.

It may be further understood that, in some of the foregoing embodiments, the pre-agreement and the pre-definition are mentioned for a plurality of times, and a person skilled in the art should understand meanings of the pre-agreement and the pre-definition. Pre-definition indicates that pre-definition is performed in a standard protocol. The pre-agreement indicates that devices pre-agree or pre-negotiate with each other. For example, a threshold (for example, a first threshold, and for another example, a second threshold) is pre-agreed on, and indicates that a value of the threshold is pre-agreed on between devices (for example, between a receive side device and a transmit side device).

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the terminal device may be implemented by a component (for example, a chip or a circuit) of the terminal device. In addition, the method and the operation implemented by the network device may also be implemented by a component (for example, a chip or a circuit) of the network device. This is not limited.

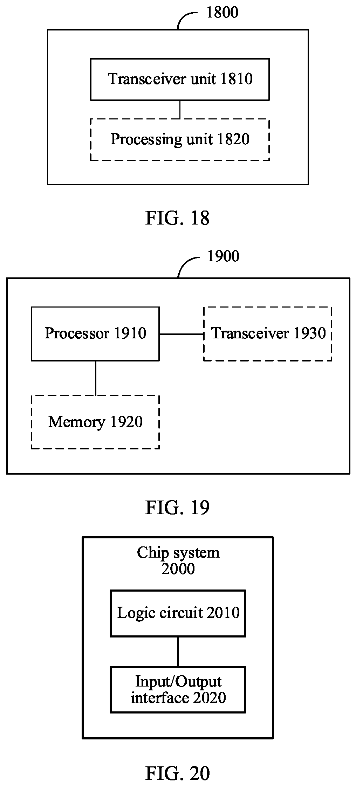

The foregoing describes in detail the methods provided in embodiments of this application with reference to FIG. 11 to FIG. 17. The following describes in detail apparatuses provided in embodiments of this application with reference to FIG. 18 to FIG. 20. It should be understood that descriptions of apparatus embodiments correspond to descriptions of method embodiments. Therefore, for content that is not described in detail, refer to the foregoing method embodiments. For brevity, details are not described herein again.

Refer to FIG. 18. For example, FIG. 18 is a diagram of a communication apparatus 1800 according to an embodiment of this application. A transceiver unit 1810. The transceiver unit 1810 may be configured to implement a corresponding communication function. The transceiver unit 1810 may also be referred to as a communication interface or a communication unit. Optionally, the apparatus 1800 further includes a processing unit 1820, which may be configured to perform processing, for example, generate a reference signal.

Optionally, the apparatus 1800 may further include a storage unit. The storage unit may be configured to store instructions and/or data. The processing unit 1820 may read the instructions and/or data in the storage unit, to cause the apparatus to implement the foregoing method embodiments.

In a first possible design, the apparatus 1800 may be the receive side device in the foregoing embodiments, and the apparatus 1800 may implement corresponding steps or procedures performed by the receive side device in the foregoing method embodiments. The transceiver unit 1810 may be configured to perform a receiving/sending-related operation (for example, an operation of sending and/or receiving data or a message) of the receive side device in the foregoing method embodiments. The processing unit 1820 may be configured to perform a processing-related operation of the receive side device in the foregoing method embodiments, or an operation other than receiving and sending (for example, an operation other than sending and/or receiving data or a message).

In a possible implementation, the transceiver unit 1810 is configured to receive a reference signal, where the reference signal includes a first sub-signal and a second sub-signal, the first sub-signal is before the second sub-signal, the reference signal includes X on-off-keying OOK symbols, the X OOK symbols include X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

Optionally, the processing unit 1820 is configured to determine the reference signal.

In another possible implementation, the transceiver unit 1810 is configured to receive a reference signal, where the reference signal includes X on-off-keying OOK symbols, the X OOK symbols include at least one first symbol and/or at least one second symbol, a signal amplitude of the first symbol is greater than or equal to a first threshold, and a signal amplitude of the second symbol is less than or equal to a second threshold; and the transceiver unit 1810 is further configured to receive a wake-up signal, where the wake-up signal is used for waking up at least one terminal device, the wake-up signal includes Z OOK symbols, the Z OOK symbols include at least one first symbol and/or one second symbol, the Z OOK symbols include Z' OOK symbols, the X OOK symbols include X' OOK symbols, a length of each of the Z' OOK symbols is different from a length of each of the X' OOK symbols, Z, Z', X, and X' are all integers greater than 0, Z' is less than or equal to Z, and X' is less than or equal to X.

In a second possible design, the apparatus 1800 may be the transmit side device in the foregoing embodiments, and the apparatus 1800 may implement corresponding steps or procedures performed by the transmit side device in the foregoing method embodiments. The transceiver unit 1810 may be configured to perform a receiving/sending-related operation (for example, an operation of sending and/or receiving data or a message) of the transmit side device in the foregoing method embodiments. The processing unit 1820 may be configured to perform a processing-related operation of the transmit side device in the foregoing method embodiments, or an operation other than receiving and sending (for example, an operation other than sending and/or receiving data or a message).

In a possible implementation, the transceiver unit 1810 is configured to send a reference signal, where the reference signal includes a first sub-signal and a second sub-signal, the first sub-signal is before the second sub-signal, the reference signal includes X on-off-keying OOK symbols, the X OOK symbols include X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

Optionally, the processing unit 1820 is configured to determine the reference signal.

In another possible implementation, the transceiver unit 1810 is configured to send a reference signal, where the reference signal includes X on-off-keying OOK symbols, the X OOK symbols include at least one first symbol and/or at least one second symbol, a signal amplitude of the first symbol is greater than or equal to a first threshold, and a signal amplitude of the second symbol is less than or equal to a second threshold; and the transceiver unit 1810 is further configured to send a wake-up signal, where the wake-up signal is used for waking up at least one terminal device, the wake-up signal includes Z OOK symbols, the Z OOK symbols include at least one first symbol and/or one second symbol, the Z OOK symbols include Z' OOK symbols, the X OOK symbols include X' OOK symbols, a length of each of the Z' OOK symbols is different from a length of each of the X' OOK symbols, Z, Z', X, and X' are all integers greater than 0, Z' is less than or equal to Z, and X' is less than or equal to X.

It should be understood that a specific process in which the units perform the foregoing corresponding steps is described in detail in the foregoing method embodiments, and for brevity, details are not described herein.

It should be further understood that the apparatus 1800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1800 may be specifically the communication apparatus in the foregoing embodiments, and may be configured to perform procedures and/or steps corresponding to the communication apparatus in the foregoing method embodiments. To avoid repetition, details are not described herein again.

The apparatus 1800 in each of the foregoing solutions has a function of implementing corresponding steps performed by the communication apparatus (for example, the transmit side device, and for another example, the receive side device) in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1810 may alternatively be a transceiver circuit (which may include, for example, a receiving circuit and a sending circuit), and the processing unit may be a processing circuit.

It should be noted that the apparatus in FIG. 18 may be the communication device (for example, the transmit side device, and for another example, the receive side device) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

Refer to FIG. 19. For example, FIG. 19 is a diagram of another communication apparatus 1900 according to an embodiment of this application. The apparatus 1900 includes a processor 1910. The processor 1910 is coupled to a memory 1920. The memory 1920 is configured to store a computer program or instructions and/or data. The processor 1910 is configured to execute the computer program or the instructions stored in the memory 1920, or read the data stored in the memory 1920, to perform the methods in the foregoing method embodiments.

Optionally, there are one or more processors 1910.

Optionally, there are one or more storages 1920.

Optionally, the memory 1920 and the processor 1910 are integrated together, or disposed separately.

Optionally, as shown in FIG. 19, the apparatus 1900 further includes a transceiver 1930. The transceiver 1930 is configured to receive and/or send a signal. For example, the processor 1910 is configured to control the transceiver 1930 to receive and/or send a signal.

For example, the processor 1910 may have a function of the processing unit 1820 shown in FIG. 18, the memory 1920 may have a function of the storage unit, and the transceiver 1930 may have a function of the transceiver unit 1810 shown in FIG. 18.

In a solution, the apparatus 1900 is configured to implement an operation performed by the communication apparatus (for example, the transmit side device, and for another example, the receive side device) in the foregoing method embodiments.

For example, the processor 1910 is configured to execute the computer program or the instructions stored in the memory 1920, to implement related operations of the communication apparatus in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described in this specification is intended to include, but is not limited to, these and any other appropriate type of storage.

Refer to FIG. 20. For example, FIG. 20 is a diagram of a chip system 2000 according to an embodiment of this application. The chip system 2000 (or may be referred to as a processing system) includes a logic circuit 2010 and an input/output interface (input/output interface) 2020.

The logic circuit 2010 may be a processing circuit in the chip system 2000. The logic circuit 2010 may be coupled to a storage unit, and invoke instructions in the storage unit, so that the chip system 2000 can implement the methods and functions in embodiments of this application. The input/output interface 2020 may be an input/output circuit in the chip system 2000, and outputs information processed by the chip system 2000, or inputs to-be-processed data or signaling information to the chip system 2000 for processing.

In a solution, the chip system 2000 is configured to implement an operation performed by the communication apparatus (for example, the transmit side device, and for another example, the receive side device) in the foregoing method embodiments.

For example, the logic circuit 2010 is configured to implement a processing-related operation performed by the communication apparatus (for example, the transmit side device, and for another example, the receive side device) in the foregoing method embodiments, and the input/output interface 2020 is configured to implement a sending and/or receiving-related operation performed by the communication apparatus (for example, the transmit side device, and for another example, the receive side device) in the foregoing method embodiments.

An embodiment of this application further provides a computer-readable storage medium. The computer-readable storage medium stores computer instructions used for implementing the method performed by the communication apparatus (for example, the transmit side device, and for another example, the receive side device) in the foregoing method embodiments.

For example, when a computer program is executed by a computer, the computer is caused to implement the method performed by the communication apparatus (for example, the transmit side device, and for another example, the receive side device) in the foregoing method embodiments.

An embodiment of this application further provides a computer program product, including instructions. When the instructions are executed by a computer, a method performed by the communication apparatus (for example, the transmit side device, and for another example, the receive side device) in the foregoing method embodiments is implemented.

An embodiment of this application further provides a communication system. The communication system includes the transmit side device and/or the receive side device in the foregoing embodiments. For example, the system includes the transmit side device and the receive side device in the embodiment in FIG. 11. For another example, the system includes the transmit side device and the receive side device in the embodiment in FIG. 16.

For explanations and beneficial effects of related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a reference signal, wherein the reference signal comprises a first sub-signal and a second sub-signal, the first sub-signal is before the second sub-signal, the reference signal comprises X on-off-keying OOK symbols, the X OOK symbols comprise X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

2. The method according to claim 1, wherein
the second sub-signal is determined based on a first sequence, or the reference signal is determined based on the first sequence.

3. The method according to claim 2, wherein a correlation value between the first sequence and the first sequence is greater than or equal to a third threshold, and a correlation value between the first sequence and a cyclic shift of the first sequence is less than or equal to a fourth threshold.

4. The method according to claim 2 or 3, wherein the first sequence is any one of the following: an m-sequence, a gold sequence, or a pseudo-random sequence.

5. The method according to any one of claims 1 to 4, wherein the first sub-signal comprises Y OOK symbols, the Y OOK symbols comprise Y1 first symbols and Y2 second symbols, Y is an integer greater than 1 and less than X, Y1 and Y2 are integers greater than or equal to 0, and Y1+Y2=Y.

6. The method according to claim 5, wherein Y1 and Y2 satisfy any one of the following: $Y 1 = Y , and Y 2 = 0 ;$ $Y 1 = Y 2 ;$ $Y 1 = \left⌈Y/2\right⌉ , and Y 2 = \left⌊Y/2\right⌋ ;$ or $Y 1 = \left⌊Y/2\right⌋ , and Y 2 = \left⌈Y/2\right⌉ .$

7. The method according to any one of claims 1 to 6, wherein the first sub-signal is used for determining a signal amplitude of the reference signal or the second sub-signal.

8. The method according to any one of claims 1 to 7, wherein the method further comprises:
receiving a wake-up signal, wherein the wake-up signal is used for waking up at least one terminal device, the wake-up signal comprises Z OOK symbols, the Z OOK symbols comprise at least one first symbol and/or at least one second symbol, the Z OOK symbols comprise Z' OOK symbols, the X OOK symbols comprise X' OOK symbols, a length of each of the Z' OOK symbols is different from a length of each of the X' OOK symbols, Z, Z', and X' are all integers greater than 0, Z' is less than or equal to Z, and X' is less than or equal to X.

9. The method according to claim 8, wherein the length of each of the Z' OOK symbols is longer than the length of each of the X' OOK symbols.

10. The method according to claim 8 or 9, wherein Z' is equal to Z, and X' is equal to X.

11. The method according to any one of claims 8 to 10, wherein the method further comprises:
receiving first indication information and/or second indication information, wherein the first indication information indicates a length of at least one of the Z OOK symbols, and the second indication information indicates a length of at least one of the X OOK symbols.

12. The method according to any one of claims 1 to 11, wherein the reference signal is a low-power synchronization signal LP-SS.

13. A communication method, comprising:
sending a reference signal, wherein the reference signal comprises a first sub-signal and a second sub-signal, the first sub-signal is before the second sub-signal, the reference signal comprises X on-off-keying OOK symbols, the X OOK symbols comprise X1 first symbols and X2 second symbols, a signal amplitude of the first symbol is greater than or equal to a first threshold, a signal amplitude of the second symbol is less than or equal to a second threshold, X is an integer greater than 0, X1 and X2 are integers greater than or equal to 0, and X1+X2=X.

14. The method according to claim 13, wherein
the second sub-signal is determined based on a first sequence, or the reference signal is determined based on the first sequence.

15. The method according to claim 14, wherein a correlation value between the first sequence and the first sequence is greater than or equal to a third threshold, and a correlation value between the first sequence and a cyclic shift of the first sequence is less than or equal to a fourth threshold.

16. The method according to claim 14 or 15, wherein the first sequence is any one of the following: an m-sequence, a gold sequence, or a pseudo-random sequence.

17. The method according to any one of claims 13 to 16, wherein the first sub-signal comprises Y OOK symbols, the Y OOK symbols comprise Y1 first symbols and Y2 second symbols, Y is an integer greater than 1 and less than X, Y1 and Y2 are integers greater than or equal to 0, and Y1+Y2=Y.

18. The method according to claim 17, wherein Y1 and Y2 satisfy any one of the following: $Y 1 = Y , and Y 2 = 0 ;$ $Y 1 = Y 2 ;$ $Y 1 = \left⌈Y/2\right⌉ , and Y 2 = \left⌊Y/2\right⌋ ;$ or $Y 1 = \left⌊Y/2\right⌋ , and Y 2 = \left⌈Y/2\right⌉ .$

19. The method according to any one of claims 13 to 18, wherein the first sub-signal is used for determining a signal amplitude of the reference signal or the second sub-signal.

20. The method according to any one of claims 13 to 19, wherein the method further comprises:
sending a wake-up signal, wherein the wake-up signal is used for waking up at least one terminal device, the wake-up signal comprises Z OOK symbols, the Z OOK symbols comprise at least one first symbol and/or at least one second symbol, the Z OOK symbols comprise Z' OOK symbols, the X OOK symbols comprise X' OOK symbols, a length of each of the Z' OOK symbols is different from a length of each of the X' OOK symbols, Z, Z', and X' are all integers greater than 0, Z' is less than or equal to Z, and X' is less than or equal to X.

21. The method according to claim 20, wherein the length of each of the Z' OOK symbols is longer than the length of each of the X' OOK symbols.

22. The method according to claim 20 or 21, wherein Z' is equal to Z, and X' is equal to X.

23. The method according to any one of claims 20 to 22, wherein the method further comprises:
sending first indication information and/or second indication information, wherein the first indication information indicates a length of at least one of the Z OOK symbols, and the second indication information indicates a length of at least one of the X OOK symbols.

24. The method according to any one of claims 13 to 23, wherein the reference signal is a low-power synchronization signal LP-SS.

25. A communication method, comprising:
receiving a reference signal, wherein the reference signal comprises X on-off-keying OOK symbols, the X OOK symbols comprise at least one first symbol and/or at least one second symbol, a signal amplitude of the first symbol is greater than or equal to a first threshold, and a signal amplitude of the second symbol is less than or equal to a second threshold; and
receiving a wake-up signal, wherein the wake-up signal is used for waking up at least one terminal device, the wake-up signal comprises Z OOK symbols, the Z OOK symbols comprise at least one first symbol and/or one second symbol, the Z OOK symbols comprise Z' OOK symbols, the X OOK symbols comprise X' OOK symbols, a length of each of the Z' OOK symbols is different from a length of each of the X' OOK symbols, Z, Z', X, and X' are all integers greater than 0, Z' is less than or equal to Z, and X' is less than or equal to X.

26. The method according to claim 25, wherein the length of each of the Z' OOK symbols is longer than the length of each of the X' OOK symbols.

27. The method according to claim 25 or 26, wherein Z' is equal to Z, and X' is equal to X.

28. The method according to any one of claims 25 to 27, wherein the method further comprises:
receiving first indication information and/or second indication information, wherein the first indication information indicates a length of at least one of the Z OOK symbols, and the second indication information indicates a length of at least one of the X OOK symbols.

29. A communication method, comprising:
sending a reference signal, wherein the reference signal comprises X on-off-keying OOK symbols, the X OOK symbols comprise at least one first symbol and/or at least one second symbol, a signal amplitude of the first symbol is greater than or equal to a first threshold, and a signal amplitude of the second symbol is less than or equal to a second threshold; and
sending a wake-up signal, wherein the wake-up signal is used for waking up at least one terminal device, the wake-up signal comprises Z OOK symbols, the Z OOK symbols comprise at least one first symbol and/or one second symbol, the Z OOK symbols comprise Z' OOK symbols, the X OOK symbols comprise X' OOK symbols, a length of each of the Z' OOK symbols is different from a length of each of the X' OOK symbols, Z, Z', X, and X' are all integers greater than 0, Z' is less than or equal to Z, and X' is less than or equal to X.

30. The method according to claim 29, wherein the length of each of the Z' OOK symbols is longer than the length of each of the X' OOK symbols.

31. The method according to claim 29 or 30, wherein Z' is equal to Z, and X' is equal to X.

32. The method according to any one of claims 29 to 31, wherein the method further comprises:
sending first indication information and/or second indication information, wherein the first indication information indicates a length of at least one of the Z OOK symbols, and the second indication information indicates a length of at least one of the X OOK symbols.

33. A communication apparatus, comprising a module or a unit configured to perform the method according to any one of claims 1 to 32.

34. A communication apparatus, comprising a processor, wherein the processor is configured to perform the method according to any one of claims 1 to 32.

35. A computer-readable storage medium, wherein the computer-readable storage medium stores a computer program or instructions, and when the computer program or the instructions are run on a communication apparatus, the communication apparatus is caused to perform the method according to any one of claims 1 to 32.

36. A computer program product, wherein the computer program product comprises a computer program or instructions for performing the method according to any one of claims 1 to 32.
